(19) Europäisches Patentamt

European Patent Office

Office européen des brevets

(11) **EP 4 676 059 A1**

(12) **EUROPEAN PATENT APPLICATION**

(43) Date of publication:
**07.01.2026 Bulletin 2026/02**

(21) Application number: 24306096.9

(22) Date of filing: **03.07.2024**

(51) International Patent Classification (IPC):
**H04N 19/70** (2014.01)    **G06T 9/00** (2006.01)

(52) Cooperative Patent Classification (CPC):
**H04N 19/70; G06T 9/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BHULLAR, Gurdeep
  MONTREAL, H3C4C9 (CA)**
• **MOCQUARD, Olivier
  35000 RENNES (FR)**
• **HAMZA, Ahmed
  COQUITLAM, V3J 3X5 (CA)**

(74) Representative: **Vossius & Partner
Patentanwälte Rechtsanwälte mbB
Siebertstraße 3
81675 München (DE)**

(54) **METHODS TO SIGNAL MESH ATTRIBUTES FOR RECONSTRUCTION IN THE V-DMC BITSTREAM**

(57)    Some embodiments of a method may include: obtaining a message corresponding to a mesh, wherein the message comprises a set of attribute information and an information type field; parsing the message for the information type field; and storing at least one attribute index based on the parsed information type field.

FIG. 9

**Description**

**INCORPORATION BY REFERENCE**

The present application incorporates by reference in their entirety the following applications: European Patent Application Serial No. EP24305101, entitled "SIGNALING SUPPLEMENTARY INFORMATION RELATED TO ATTRIBUTES IN V3C BITSTREAM AND BASEMESH BITSTREAM" and filed January 16, 2024 ("'101 application").

**BACKGROUND**

Visual Volumetric Video-based Coding (V3C) standards are being developed for the coding of immersive scenes. A description of V3C is provided in ISO/IEC JTC 1/SC29, "ISO/IEC 23090-5:2023, Coded representation of immersive media Part 5: Visual volumetric video-based coding (V3C) and video-based point cloud compression (V-PCC)," November 2023. Within the V3C framework, a video-based dynamic mesh coding (V-DMC) is under development and is described in ISO/IEC 23090-29, S. 2. Secretariat, "WD 5.0 of V-DMC," 20 October 2023.

**SUMMARY**

An example method in accordance with some embodiments may include: obtaining a message corresponding to a mesh, wherein the message includes a set of attribute information and an information type field; parsing the message for the information type field; and storing at least one attribute index based on the parsed information type field.
In some embodiments of the example method, the message includes a V3C unit header.
In some embodiments of the example method, the information type field indicates a unit type corresponding to a basemesh data (BMD) unit type.
In some embodiments of the example method, the set of attribute information includes a texture coordinate index and a facegroup identifier index.
In some embodiments of the example method, storing the attribute index based on the parsed information type field includes: storing, as a first attribute index, the texture coordinate index of the set of attribute information; and storing, as a second attribute index, the facegroup identifier index of the set of attribute information.
In some embodiments of the example method, the message corresponds to a VPS V-DMC extension structure.
In some embodiments of the example method, the message corresponds to an Atlas Sequence Parameter Set (ASPS) V-DMC extension structure.
In some embodiments of the example method, the information type field indicates an attribute type corresponding to a VPS atlas identifier.
In some embodiments of the example method, the set of attribute information includes a texture coordinate index and a facegroup identifier index.
In some embodiments of the example method, storing the attribute index based on the parsed information type field includes: responsive to determining that the parsed information type field corresponds to a texture coordinate attribute, storing, as the at least one attribute index, the texture coordinate index of the set of attribute information.
In some embodiments of the example method, storing the attribute index based on the parsed information type field includes: responsive to determining that the parsed information type field corresponds to a facegroup identifier attribute, storing, as the at least one attribute index, the facegroup identifier index of the set of attribute information.
In some embodiments of the example method, the message corresponds to an SEI message, and the information type field indicates an attribute type.
In some embodiments of the example method, the set of attribute information includes a texture coordinate index and a facegroup identifier index.
Some embodiments of the example method may further include: decoding a basemesh frame corresponds to the mesh; and reconstructing the mesh using the decoded basemesh frame and the stored at least one attribute index.
An example apparatus in accordance with some embodiments may include: a processor; and a computer-readable medium storing instructions operative, when executed by the processor, to cause the apparatus to perform the method of any one of the methods listed above.

**BRIEF DESCRIPTION OF THE DRAWINGS**

FIG. 1 is a system diagram illustrating an example set of interfaces for a system according to some embodiments.

FIG. 2 is a process diagram illustrating an example mesh decoding process using intra frame decoding according to some embodiments.

FIG. 3 is a process diagram illustrating an example mesh encoding process using intra frame encoding according to some embodiments.

FIG. 4 is a schematic illustration showing an example encapsulation of different sub-bitstreams in a bitstream encoding a dynamic mesh such as a V-DMC bitstream according to some embodiments.

FIG. 5 is a code listing illustrating an example process for constructing basemeshFrame and baseSubmeshFrame structures according to some embodiments.

FIG. 6 is a code listing illustrating an example process for constructing a basemeshFrame structure according to some embodiments.

FIG. 7 is a code listing illustrating an example process for constructing a basemeshFrame structure according to some embodiments.

FIG. 8 is a code listing illustrating an example process for identifying basemesh attribute indices form an SEI message according to some embodiments.

FIG. 9 is a flowchart illustrating an example process for obtaining mesh attribute indexes for reconstruction in a V-DMC bitstream according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

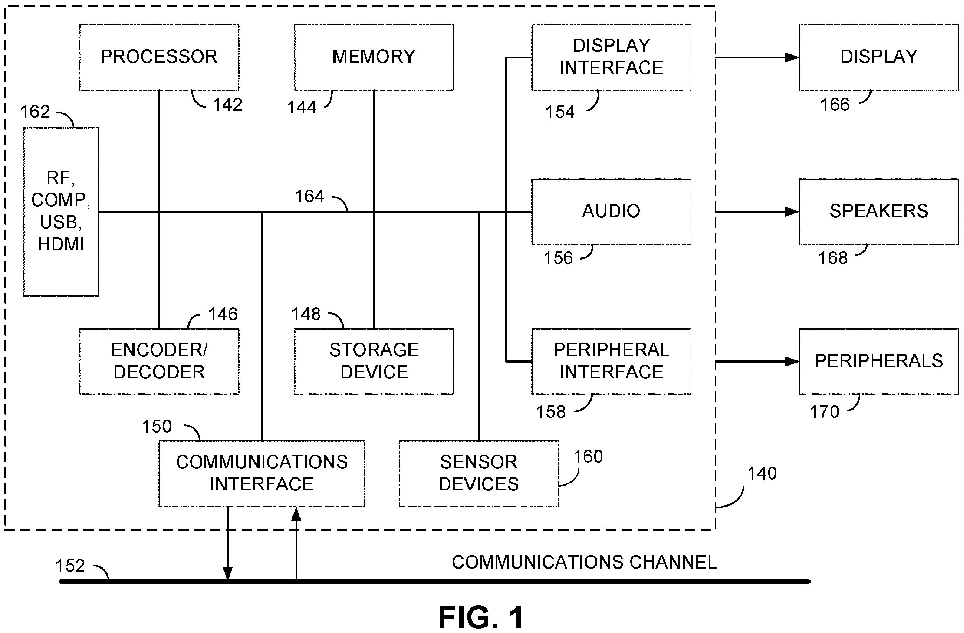

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

**Overview of Dynamic Mesh Coding**

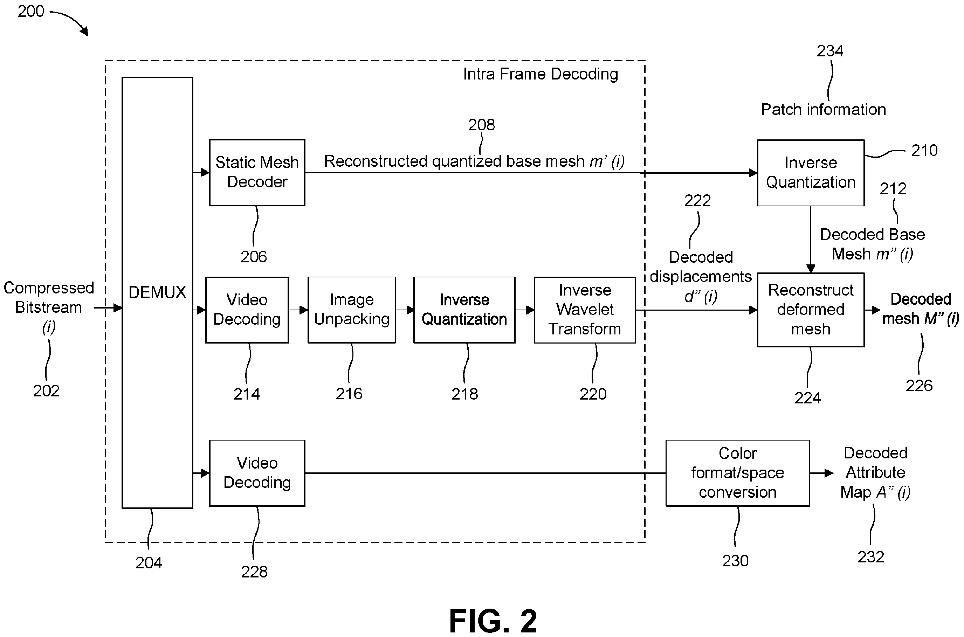

FIG. 2 is a process diagram illustrating an example mesh decoding process using intra frame decoding according to some embodiments. For some embodiments of a mesh decoding process 200, a compressed bitstream $b(i)$ 202 is demultiplexed by a demultiplexer 204 into data representing patch information 234, data representing a static mesh, video data representing mesh displacements, and video data representing attributes. The data representing a static mesh is decoded by a static mesh decoder 206 into a reconstructed quantized base mesh $m'(i)$ 208 and passed through an inverse quantization process 210, resulting in a decoded base mesh $m''(i)$ 212. The video data representing mesh displacements is decoded by a video decoder 214. The decoded image undergoes image unpacking 216 and inverse quantization 218. An inverse wavelet transform 220 is applied, resulting in decoded displacements $d''(i)$ 222. The deformed mesh is reconstructed 224 using the decoded base mesh $m''(i)$ 212 and the decoded displacements $d''(i)$ 222, resulting in a decoded mesh $M''(i)$ 226. The video data representing attributes undergoes video decoding 228, and color format/space conversion 230 is applied, resulting in a decoded attribute map $A''(i)$ 232.

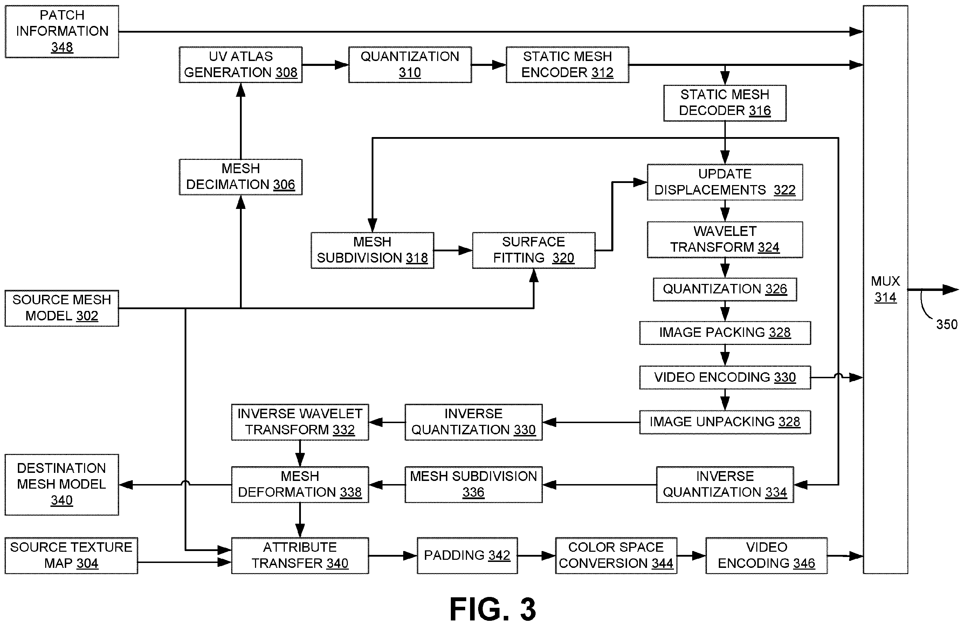

FIG. 3 is a process diagram illustrating an example mesh encoding process using intra frame encoding according to some embodiments. A source mesh model 302 is provided as an input mesh M(i) to the mesh encoding process. The source mesh model 302 is associated with a source texture map 304 that is proved as an input texture map A(i) to the encoding process. The input mesh is decimated at 306 to generate a base mesh m(i) with a reduced number of vertices, and a UV atlas is generated for the base mesh AT 308. The base mesh is quantized at 310 and encoded at 312, with the compressed base mesh data being multiplexed at 314 into a dynamic mesh bitstream. The compressed base mesh data is reconstructed at the encoder to generate reconstructed base mesh m'(i) with a static mesh decoder 316. The reconstructed base mesh is subdivided at 318 by adding new vertices. A subdivision surface fitting process is performed at 320 by comparing the subdivided base mesh with the input mesh M(i) to determine a set of displacements d(i) that deform the vertices of the subdivided base mesh to correspond more closely to the surfaces defined by the input mesh M(i). These displacements may be updated at 322 into updated displacements d'(i) based on difference between the original base mesh m(i) and the reconstructed base mesh m'(i). These updated displacements are encoded using a wavelet transform 324 that generates wavelet coefficients e'(i), which are quantized at 326 and packed at 328 into an image format. A time-varying series of images representing the wavelet coefficients may be encoded at 330 using conventional video encoding techniques, and the encoded video may be multiplexed at 314 with the data representing the compressed base mesh. At the encoder, the displacements are reconstructed from the encoded video through image unpacking 328, inverse quantization 330, and inverse wavelet transform 332 to generate a reconstructed set of displacements d''(i). A reconstructed base mesh M''(i) is obtained through inverse quantization at 334 of the reconstructed quantized base mesh m'(i), and the reconstructed base mesh M''(i) is subdivided at 336. A reconstructed deformed mesh DM(i) is generated at 338 by applying the reconstructed set of displacements d''(i) to the reconstructed base mesh m'(i). The reconstructed deformed mesh DM(i) is used as a destination mesh model 340 for the purpose of attribute transfer.

Using the reconstructed deformed mesh DM(i) (destination mesh model 340), the input mesh M(i) (source mesh model 302), and the input texture map A(i) (source texture map 304), an attribute transfer process is performed to provide attribute values for a destination texture map A'(i) that is associated with the reconstructed deformed mesh DM(i). Pixels in the texture map A'(i) that are not associated with any triangle of the reconstructed deformed mesh DM(i) may be filled using a padding process 342. A color space conversion 344 may be performed, a time-varying series of texture maps A'(i) may be encoded using conventional video encoding techniques 346, and the encoded video may be multiplexed at 314 into a bitstream 350 with the data representing the displacements and the compressed base mesh. Patch information 348 may also be multiplexed in the bitstream.

FIGs. 2 and 3 illustrate examples of intra mesh encoding and decoding. It should be noted that example embodiments described herein may also be implemented in the case of inter mesh encoding and decoding.

For V-DMC, a framework is developed by extending V3C. V3C is described at ISO/IEC 23090-5:2021, Information technology - Coded representation of immersive media - Part 5: Visual volumetric video-based coding (V3C) and video-based point cloud compression (V-PCC).

In MPEG, the V-DMC standard has started to work on static mesh codec. The static mesh codec is specified in Annex-I of ISO/IEC 23090-29. The static mesh codec in Annex I is the default codec to compress static mesh. This includes mesh geometry, mesh connectivity, and mesh attributes. The mesh attributes provide additional information about the mesh vertices or mesh faces.

The V-DMC framework may involve different attributes specified for a dynamic mesh sequence. In V-DMC, the underlying static mesh codec may decode mesh attributes per face or per vertex. These attributes may provide additional information about the static mesh e.g., color, texture coordinates, normals, reflectance information, transparency information, and/or user-defined attributes.

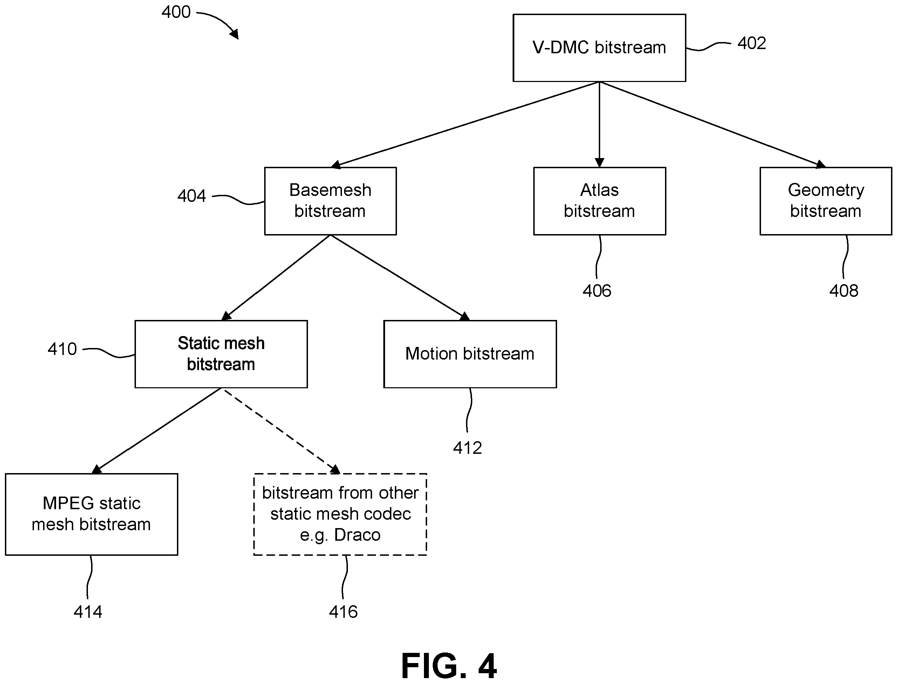

FIG. 4 is a schematic illustration showing an example encapsulation of different sub-bitstreams in a bitstream encoding a dynamic mesh such as a V-DMC bitstream according to some embodiments. FIG. 4 shows the hierarchical structure 400 of a V-DMC bitstream 402. The V-DMC bitstream 402 may be broken down into a basemesh bitstream 404, an atlas bitstream 406, and a geometry bitstream 408. The basemesh bitstream 404 may be split into a static mesh bitstream 410 and a motion bitstream 412. The static mesh bitstream 410 may be split into an MPEG static mesh bitstream 414 and a bitstream from other static mesh codecs (e.g., Draco) 416.

The attributes from the static mesh codec may further be used by the basemesh codec. A basemesh bitstream 404 is further encapsulated in a V3C bitstream. An extension mechanism in V3C bitstream may provide information about the type of attributes that a V3C bitstream/framework will use from the underlying basemesh codec. Additionally, the basemesh bitstream 404 may provide a mechanism to provide information about the type of mesh attribute of interest from the underlying static mesh codec.

**Basemesh Attribute**

According to S. 2. Secretariat, Text of ISO/IEC CD 23090-29 Video-Based Mesh Coding, ISO/IEC, 04 June 2024, *available at:* dms<dot>mpeg<dot>expert/doc_end_user/documents/146_Rennes/wg11/ MDS23903_WG07_N00885<dot>zip (*"ISO/IEC CD 23090-29"*), a basemesh bitstream is a sub-component of a V-DMC bitstream. A basemesh bitstream carries information about time-sequenced mesh bitstream. The basemesh bitstream may be geometrically enhanced with techniques, such as sub-division and lifting transforms, to adjust the fidelity of the final mesh, hence the name "basemesh". A mesh may include properties, such as geometrical information, which may include vertex positions and connectivity information. The basemesh bitstream also may include auxiliary information related to mesh vertices, such as colors per vertices, texture coordinates, or may indicate a unique identifier for connected group of vertices, e.g., a facegroup ID, and more. Such auxiliary information is also called basemesh attribute in the V-DMC specification.

As described in *ISO/IEC CD 23090-29*, V3C parameter set V-DMC extension syntax structure signals information about the basemesh bitstream. The information is used for reconstruction of the basemesh.

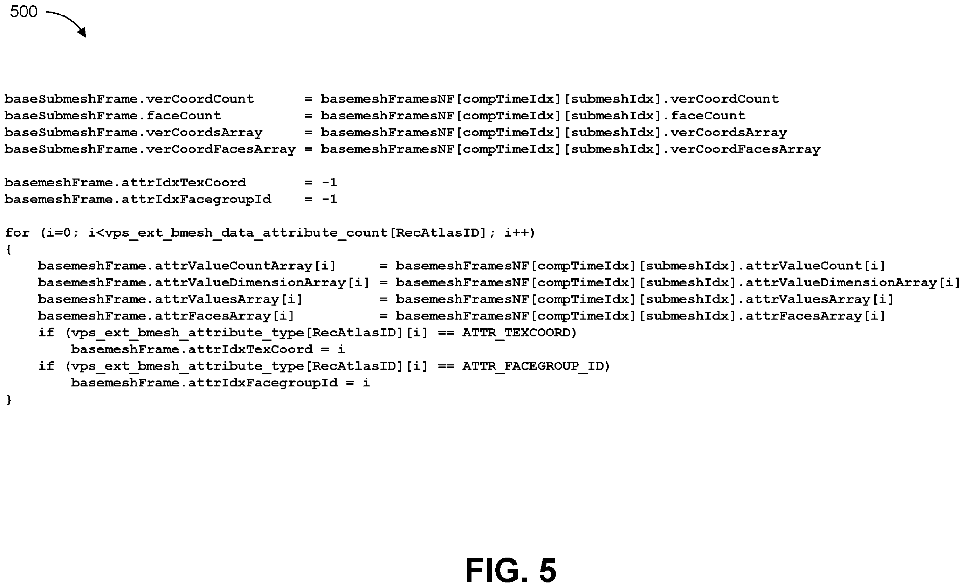

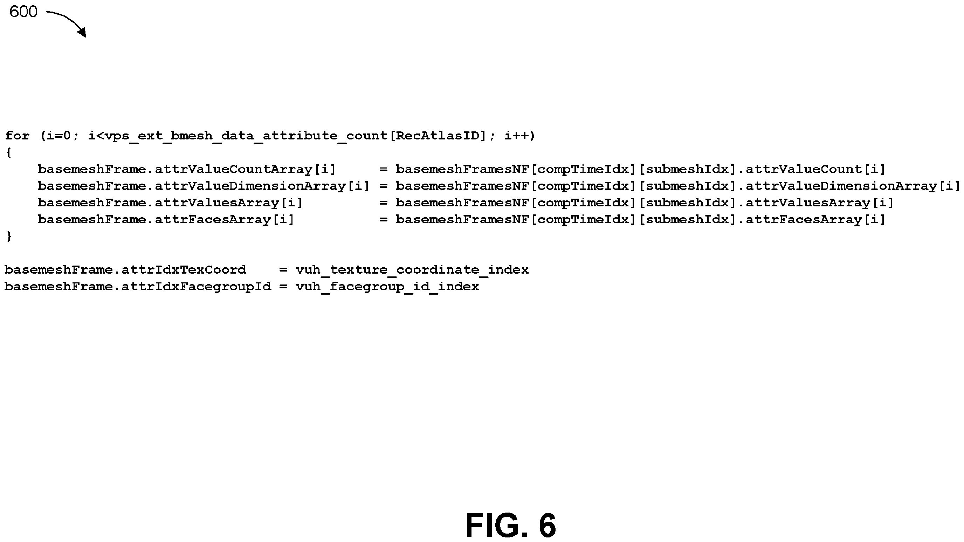

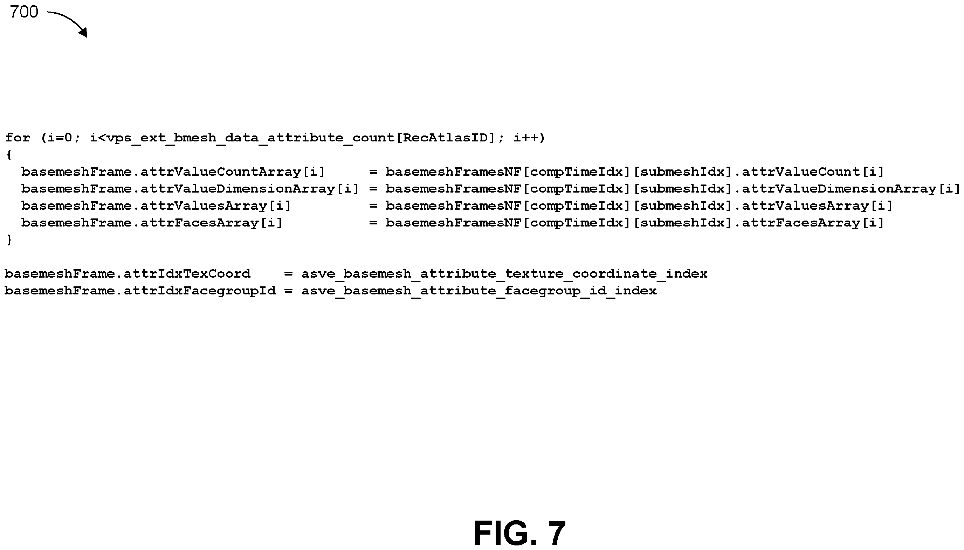

Table 1 and FIG. 5 show the VPS V-DMC extension syntax structure without modification. Table 2 and FIG. 6 show explicit signaling via a V3C Unit Header. Table 3 shows explicit signaling via the VPS V-DMC extension syntax structure with modification to add fields for the attribute indexes for the texture coordinates and the facegroup IDs. Table 5 and FIG. 7 show explicit signaling via an SEI message. These tables and figures are described in more detail below.

**Table 1.**

| Code Line | Descriptor |
|---|---|
| vps_vdmc_extension() { | |
| for (k=0; k<vps_atlas_count_minus1+1; k++) { | |
| j = vps_atlas_id[k] | |
| vps_ext_bmesh_data_substream_codec_id[j] | u (8) |
| vps_ext_bmesh_geometry_3d_bit_depth_minus1[j] | u (5) |
| vps_ext_bmesh_geometry_3d_msb_align_flag[j] | u (1) |
| vps_ext_bmesh_data_attribute_count[j] | u (8) |
| for (i=0; i<vps_ext_bmesh_data_attribute_count[j]; i++) { | |
| vps_ext_bmesh_attribute_index[j][i] | u (7) |
| vps_ext_bmesh_attribute_bit_depth_minus1[j][i] | u (5) |
| vps_ext_bmesh_attribute_msb_align_flag[j][i] | u (1) |
| vps_ext_bmesh_attribute_type[j][i] | u (4) |
| } | |
| for (i=0; i<ai_attribute_count[j]; i++) { | |
| vps_ext_attribute_frame_width[j][i] | ue (v) |
| vps_ext_attribute_frame_height[j][i] | ue (v) |
| } | |
| } | |
| } | |

Table 1 shows a list of basemesh attributes for reconstruction that are created using the syntax elements in the VPS V-DMC extension syntax structure. Table 1 shows an example code listing for such an example process vps_vdmc_extension(). A loop is cycled through for each VPS atlas structure. An index k is used as a counter for such a loop.

In the example code listing shown in Table 1, index "j" is set to the VPS atlas ID ("vps_atlas_id") for the current VPS atlas index count ("k"). Each VPS atlas ID's data structure may use some top-level elements, such as a substream codec ID ("vps_ext_bmesh_data_substream_codec_id[j]"), a 3D geometry bit depth ("vps_ext_bmesh_geometry_3d_bit_depth_minus1 [j]"), a 3D geometry MSB alignment flag ("vps_ext_bmesh_geometry_3d_msb_align_flag [j]") and a data attribute count ("vps_ext_bmesh_data_attribute_count[j]").

For an atlas with an atlas ID of vps atlas_ID, the size of the basemesh attribute list is equal to the value of syntax element "vps_ext_bmesh_data_attribute_count". In Table 1, index "i" is used to loop through such a bashmesh attribute list. Syntax elements provide additional information about each basemesh attribute, such as attribute index in the basemesh bitstream ("vps_ext_bmesh_attribute_index[j][i]"), bit depth ("vps_ext_bmesh_attribute_bit_depth_minus1 [j][i]"), bit depth alignment ("vps_ext_bmesh_attribute_msb_align_flag[j][i]"), and attribute type ("vps_ext_bmesh_attribute_type[j][i]"). The syntax element "vps_ext_bmesh_attribute_type[j][i]" identifies the basemesh attribute type, such as ATTR_NORMAL, ATTR_TEXCOORD, and ATTR_FACEGROUP_ID, among other basemesh attribute types.

In the example code listing shown in Table 1, index "i" is re-used for a second loop. This second loop defines frame width and frame height for each AI attribute associated with a VPS atlas ID (index "j").

The decoder and renderer are instructed which and how to make use of the basemesh attributes for the final reconstruction of the mesh. There may be cases in which the same type of mesh attribute is signaled multiple times in the basemesh bitstream. For example, a facegroupID basemesh attribute may indicate a first connected group of four vertices of the mesh, and another facegroupID basemesh attribute may indicate a second connected group of three vertices of the mesh. Another example may occur when a basemesh attribute texture coordinate is used to achieve a different texture mapping per mesh.

In cases such as reflection mapping (see *Reflection Mapping,* WIKIPEDIA, *available at:* en<dot>Wikipedia<do­t>org/wiki/Reflection_mapping), a different texture coordinate set other than the one used for applying the basic diffuse texture is needed to achieve the illusion of reflection. Other use cases of multi-texture coordinates may include light mapping and alpha mapping. See *Light Mapping,* FLIPCODE, *available at:* www<dot>flipcode<dot>com/archives/Light_Mapping Theory_and_Implementation<dot>shtml and *Alpha Mapping,* WIKIPEDIA, *available at:* en<dot>Wikipedia<dot>org/wiki/Alpha_mapping. Therefore, proper reconstruction of the basemesh depends on which basemesh attribute is used.

**Basemesh Reconstruction**

After a basemesh frame is decoded, the decoded frame may be transformed by additional processes to a format that is used for the reconstruction process. Such transformations may be, for example, for time-alignment, or conversion to nominal basemesh format, among other things. Transformed basemesh frames along with other decoded V-DMC components, such as displacements and attributes, are processed to reconstruct the mesh content.

The reconstruction process requires basemesh attributes, such as texture coordinates and facegroup identifiers. Currently, in the reconstruction process, a process to identify the index of basemesh attributes for basemesh attribute types ATTR_TEXCOORD and ATTR_FACEGROUP_ID is understood to be vaguely defined.

The current version of V-DMC specification lacks definition of a mechanism for selecting basemesh attributes, which are used for reconstruction. The specification fails to consider the cases in which multiple texture coordinates attributes or multiple facegroup ID attributes are present in the bitstream. In such cases, the identification is understood to be ill-informed. Furthermore, the current version of V-DMC lacks definition of a mechanism for selecting mesh attributes, such as a texture coordinate mesh attribute and/or a face group ID mesh attribute, for reconstruction. Some embodiments may solve such problems. Several methods are described herein which define a mechanism to select basemesh attribute for mesh reconstruction for some embodiments.

FIG. 5 is a code listing illustrating an example process for constructing basemeshFrame and baseSubmeshFrame structures according to some embodiments. The input to the reconstruction process is a baseSubmeshFrame structure, which may be constructed as shown in FIG. 5. The code listing in FIG. 5 shows an example process 500.

As seen in the example code listing of FIG. 5, the vertex coordinates count ("baseSubmeshFrame.verCoordCount"), the face count ("baseSubmeshFrame.faceCount"), the vertex coordinates array ("baseSubmeshFrame.verCoordsArray"), and the vertex coordinates faces array ("baseSubmeshFrame.verCoordFacesArray") for the base submesh frame are initialized for the current submesh index ("submeshInx").

In the example code listing of FIG. 5, a loop is cycled through to initialize a basemesh frame structure ("basemeshFrame"). An index "i" is used as the loop counter. The basemesh frame structure attribute count ("vps_ext_bmesh_data_attribute_count[]") shown in FIG. 5 is also seen in Table 1. In FIG. 5, the received atlas ID ("RecAtlasID") is used as an index for some of the arrays shown in FIG. 5.

For each basemesh data attribute, the attribute value count ("basemeshFrame.attrValueCountArray[i]"), the attribute value dimension ("basemeshFrame.attrValueDimensionArray[i]"), the attribute value ("basemeshFrame.attrValuesArray[i]"), and the attribute faces ("basemeshFrame.attrFacesArray[i]") are initialized for the current submesh index ("submeshlnx").

The array for the basemesh attribute type ("vps_ext_bmesh_attribute_type[][]") shown in FIG. 5 is also seen in Table 1. For each basemesh data attribute associated with the current received atlas ID, a check is performed. If the attribute type is type ATTR_TEXTCOORD, then the texture coordinates attribute index ("basemeshFrame.attrldxTex-Coords") is set to the current attribute index ("i"). Likewise, if the attribute type is type ATTR_FACEGROUP_ID, then the facegroup ID attribute index ("basemeshFrame.attrldxFacegrouplds") is set to the current attribute index ("i").

Stated differently, as seen in the code listing of FIG. 5, the indices of basemesh attribute type of texture coordinate and facegroup ID in the basemesh attribute list are determined when basemesh attributes of type ATTR_TEXCOORD and ATTR_FACEGPROUP_ID are encountered.

## Atlas Sequence Parameter Set

An atlas bitstream in the V3C provides information to associate different V3C sub-components and information related to perform the 3D reconstruction of the application based on V3C bitstream. One such application of V3C is V-DMC. A sequence of a V-DMC bitstream is a sequence of V-DMC coded frames. An atlas provides a set of parameters which remain common for an entire sequence of a V-DMC bitstream. Such parameters are combined in a syntax structure called an Atlas Sequence Parameter Set (ASPS). For V-DMC, ASPS has been further extended to provide V-DMC specific parameters. For more information, see sub-clause 8.3.6.1.3 in *ISO/IEC* CD 23090-29.

## Implicit Determination of Mesh Attribute for Reconstruction

This method describes an implicit methodology to determine a mesh attribute for reconstruction. For example, the basemesh sub-component may signal different attributes, such as texture coordinates and facegroup IDs, among other attributes. To perform proper reconstruction, only a subset of the mesh attributes is used for some embodiments. The mesh attributes may be chosen in an implicit manner. In this case, either the first or the last of the mesh attribute with the same mesh attribute type is chosen for reconstruction.

Based on the above method, when parsing a mesh attribute of a certain mesh attribute type, a V-DMC decoder may ignore all mesh attributes of the same mesh attribute type except the first one. Alternatively, a V-DMC decoder may ignore all mesh attribute of the same mesh attribute type except the first one or the last one.

In another case, for some embodiments, there may be an additional constraint in the basemesh bitstream to signal at most one mesh attribute of a certain mesh attribute type. This methodology may resolve the case where the basemesh bitstream includes multiple attributes of the same mesh attribute type. The selection of the mesh attribute in the basemesh bitstream is therefore implicitly controlled by the constraint.

## Explicit Signaling of Mesh Attributes for Reconstruction

In this method, the mesh attributes to be used in the reconstruction process are explicitly signaled within the V-DMC bitstream. Signaling the index of a mesh attribute explicitly in the V-DMC bitstream may facilitate the identification of mesh attributes, which may be necessary for mesh reconstruction. A mesh attribute in the V-DMC bitstream may be identified using its index in the list of basemesh attribute carried in the bitstream. Four methods are described in this section to explicitly signal and determine the mesh attributes for reconstruction. These methods, which are described below, may be invoked to determine the basemesh attribute for reconstruction.

Firstly, signaling the mesh attributes for reconstruction in the V3C unit header may be used when V3C unit type indicates a basemesh data component (V3C_BMD). The use of the V3C_BMD unit type signifies that the information conveyed with the syntax elements in the V3C unit header are in the scope of a basemesh component. The top-level portions of the V3C bitstream indicate which attributes are used for mesh reconstruction. New syntax elements are added in the V3C unit header. Since the size of V3C unit header is limited to 4 bytes, the amount of information contained in the V3C unit header is concise.

Secondly, signaling of the mesh attribute information in the V-DMC extension of the VPS may be done by adding new syntax elements. This methodology ensures that the bitstream has the information on reconstruction at the beginning of the bitstream.

Thirdly, signaling of mesh attribute information in the V-DMC extension of the ASPS may be done by adding new syntax elements. This method uses decoding of the atlas bitstream prior to the basemesh reconstruction in order to instruct the correct mesh attribute indices.

Fourthly, a supplemental enhancement information (SEI) message may be added to the atlas bitstream or basemesh bitstream to signal mesh attributes needed for reconstruction. Such a methodology does not interfere with the current bitstream design.

**Signaling in the V3C Unit Header**

In some embodiments, syntax elements are introduced in the V3C unit header to determine the index of mesh attributes used for reconstruction. Since the V3C unit header is a 4-byte header field, two syntax elements are introduced to identify the index of the mesh attribute for mesh attribute types: texture coordinate and facegroup ID. The syntax elements are introduced when the type of V3C unit ("vuh_unit_type") indicates basemesh data (BMD). This method may be used to indicate the index for at most two mesh attributes due to the limited V3C unit header size.

**Table 2.**

| Code Line | Descriptor |
|---|---|
| v3c_unit_header () { | |
| vuh_unit_type | u (5) |
| if (vuh_unit_type == V3C_BMD) { | |
| vuh_v3c_parameter_set_id | u (4) |
| vuh_atlas_id | u (6) |
| vuh_texture_coordinate_index | u (7) |
| vuh_facegroup_id_index | u (7) |
| vuh_reserved_zero_3bits | u (3) |
| } else { | |
| vuh_reserved_zero_27bits | u (27) |
| } | |
| } | |

Table 2 shows an example code listing for a V3C unit header. In this example, 5 bits are set aside for the VUH unit type ("vuh_unit_type"). If the VUH unit type is BMD ("V3C_BMD"), then the example creates 5 fields. Otherwise, the remaining 27 bits of the header are reserved for future use ("vuh_reserved_zero_27bits"). For this example, when the VUH unit type is BMD, 4 bits are used for the V3C parameter set ID ("vuh_v3c_parameter_set_id"), 6 bits are used to signal the atlas ID ("vuh_atlas_id") which corresponds to the basemesh bitstream, 7 bits are used to signal the texture coordinate index ("vuh texture coordinate_index") in the basemesh bitstream, 7 bits are used to signal the facegroup ID index ("vuh_facegroup_id_index") in the basemesh bitstream, and 3 bits are reserved for future use ("vuh_reserved_zero-o_3bits").

FIG. 6 is a code listing illustrating an example process for constructing a basemeshFrame structure according to some embodiments. With the introduced syntax elements, the attribute properties for a basemesh frame structure may be determined as shown in FIG. 6 with alternation to the basemeshFrame construction process shown in FIG. 5. The code listing in FIG. 6 shows an example process 600.

In the example code listing of FIG. 6, a loop, similar to FIG. 5, is cycled through to initialize a basemesh frame structure ("basemeshFrame"). An index "i" is used as the loop counter. The basemesh frame structure attribute count ("vps_ext_bmesh_data_attribute_count[]") shown in FIG. 6 is also seen in Table 1. In FIG. 6, the received atlas ID ("RecAtlasID") is used as an index for the basemesh frame structure attribute count.

For each basemesh data attribute, the attribute value count ("basemeshFrame.attrValueCountArray[i]"), the attribute value dimension ("basemeshFrame.attrValueDimensionArray[i]"), the attribute value ("basemeshFrame.attrValuesArray[i]"), and the attribute faces ("basemeshFrame.attrFacesArray[i]") are initialized for the current submesh index ("submeshInx").

Different than FIG. 5, the code listing example of FIG. 6 sets the texture coordinate index and the facegroup ID index outside of the basemesh data attribute loop. In the example of FIG. 6, the texture coordinate index ("basemeshFrame.attrIdxTexCoords") is set to the texture coordinate field in the VUH header ("vuh_texture_coordinate_index"), which is also shown in Table 2. The facegroup ID index ("basemeshFrame.attrIdxFacegroupIds") is set to the facegroup ID field in the VUH header ("vuh_facegroup_id_index"), which is likewise also shown in Table 2.

Stated differently, the value of syntax element vuh_texture_coordinate_index indicates the index of texture coordinate basemesh attribute from the basemesh bitstream that is used for reconstruction with an atlas indicated by atlasID vuh atlas_ID. The value indicated by vuh_texture_coordinate_index is less than or equal to the vps_ext_bmesh_data_attribute_count. Furthermore, the value of syntax element vuh_facegroup_id_index indicates the index of the facegroup ID basemesh attribute from the basemesh bitstream that is used for reconstruction with an atlas indicated by atlasID vuh_atlas_ID. The value indicated by vuh_facegroup_id_index is less than or equal to the vps_ext_bmesh_data_attribute_count.

**Signaling in the VPS V-DMC Extension**

In some embodiments, the index of mesh attributes such as texture coordinate or facegroupID may be signaled at the VPS-level. The index of the mesh attribute for each basemesh attribute for reconstruction may be signaled to VPS in the V-DMC extension syntax structure as shown in Table 3.

**Table 3.**

| Code Line | Descriptor |
|---|---|
| vps_vdmc_extension() { | |
|    for (k=0; k<vps_atlas_count_minus1+1; k++){ | |
|       j = vps_atlas_id[k] | |
|       vps_ext_bmesh_data_substream_codec_id[j] | u (8) |
|       vps_ext_bmesh_data_attribute_count[j] | u (8) |
|       . . . | |
|       vps_ext_bmesh_texture_coordinate_index[j] | u (8) |
|       vps_ext_bmesh_facegroup_id_index[j] | u (8) |
|    } | |
| } | |

Comparing Table 1 with Table 3, fields are added inside VPS atlas count loop for the basemesh texture coordinate index ("vps_ext_bmesh_texture_coordinate_index[j]") and the basemesh facegroup ID index ("vps_ext_bmesh_facegroup_id_index[j]"). Each of these items is indexed by the VPS atlas ID for the current VPS atlas loop counter ("j = vps_atlas_id[k]"). Also, each of these indexes is given a field of 8 bits. The ellipses in Table 3 indicate that the elements of Table 1 that are not shown in Table 3 are to be repeated here in Table 3.

Stated differently, syntax elements, such as vps_ext_bmesh_texture_coordinate_index and vps_ext_bmesh_facegroup_id_index, may be used to identify the mesh attributes (texture coordinates and facegroupID) by their respective index for reconstruction for a given atlas j. The value indicated by vps_ext_bmesh_texture_coordinate_index and vps_ext_bmesh_facegroup_id_index shall be less than or equal to the vps_ext_bmesh_data_attribute_count. The identification of indices for the texture coordinate and the facegroupID basemesh attributes may be determined by Eqs. 1 and 2:

$$basemeshFrame.attrIdxTexCoord = vps\_ext\_bmesh\_texture\_coordinate\_index \quad (1)$$

$$basemeshFrame.attrIdxFacegroupId = vps\_ext\_bmesh\_facegroup\_id\_index \quad (2)$$

**Signaling in the Atlas Bitstream**

In some embodiments, the index of the basemesh attributes such as texture coordinates and facegroup ID is signalled in the atlas bitstream extension of V-DMC. A V-DMC extension to Atlas sequence parameter set is specified as described above.

**Table 4.**

| Code Line | Descriptor |
|---|---|
| asps_vdmc_extension() { | |
|    . . . | |
|    asve_basemesh_attribute_texture_coordinate_present_flag | u (1) |

(continued)

| Code Line | Descriptor |
|---|---|
| asve_basemesh_attribute_facegroup_id_present_flag | u (1) |
| if (asve_basemesh_attribute_texture_coordinate_present_flag) | |
| asve_basemesh_attribute_texture_coordinate_index | u (7) |
| } | |
| if (asve_basemesh_attribute_facegroup_id_present_flag) | |
| asve_basemesh_attribute_facegroup_id_index | u (7) |
| } | |
| } | |

In Table 4, the syntax element asve basemesh_attribute texture coordinate_present flag signals whether the texture coordinate attribute is present in the basemesh bitstream or not. If the texture coordinate attribute is present in the basemesh attribute (in which asve basemesh_attribute texture coordinate_present flag is equal to 1), then asve_basemesh_attribute_texture_coordinate_index signals the index of the basemesh attribute in the basemesh bitstream. The texture coordinate in the basemesh at the index value asve_basemesh_attribute_texture_coordinate_index is used for reconstruction of the basemesh. The value of asve_basemesh_attribute_texture_coordinate_index shall be within the range of 0 to vps_ext_bmesh_data_attribute_count. If the asve_basemesh attribute texture coordinate_present flag is equal to 0, then the texture coordinate index is identified through some external means. One such external means is via an SEI message as described below.

Similarly, as shown in Table 4, the syntax element asve basemesh_attribute facegroup id_present flag signals whether the facegroup ID attribute is present in the basemesh bitstream or not. If the facegroup ID attribute is present in the basemesh attribute, then asve_basemesh_attribute_facegroup_id_index signals the index of the basemesh attribute in the basemesh bitstream. The facegroup ID in the basemesh at the index value asve_basemesh_attribute_facegroup_id_index is used for reconstruction of the basemesh. The value of asve_basemesh_attribute_facegroup_id_index shall be within the range of 0 to vps_ext_bmesh_data_attribute_count. If the asve basemesh_attribute facegroup id_present flag is equal to 0, then the facegroup ID index is identified through some external means. One such external means is via an SEI message as described below.

FIG. 7 is a code listing illustrating an example process for constructing a basemeshFrame structure according to some embodiments. With the introduced syntax elements, the attribute properties for a basemesh frame structure may be determined as shown in FIG. 7 with alternation to the basemeshFrame construction process shown in FIG. 6. The code listing in FIG. 7 shows an example process 700.

In the example code listing of FIG. 7, a loop, similar to FIG. 6, is cycled through to initialize a basemesh frame structure ("basemeshFrame"). An index "i" is used as the loop counter. The basemesh frame structure attribute count ("vps_ext_bmesh_data_attribute_count[]") shown in FIG. 7 is also seen in Table 1. In FIG. 7, the received atlas ID ("RecAtlasID") is used as an index for the basemesh frame structure attribute count.

For each basemesh data attribute, the attribute value count ("basemeshFrame.attrValueCountArray[i]"), the attribute value dimension ("basemeshFrame.attrValueDimensionArray[i]"), the attribute value ("basemeshFrame.attrValuesArray[i]"), and the attribute faces ("basemeshFrame.attrFacesArray[i]") are initialized for the current submesh index ("submeshInx").

The code listing example of FIG. 7 sets the texture coordinate index and the facegroup ID index outside of the basemesh data attribute loop. Different than FIG. 6, the code listing example of FIG. 7 sets the texture coordinate index ("basemeshFrame.attrIdxTexCoords") to the texture coordinate field in the ASVE basemesh attribute structure ("asve_basemesh_attribute_texture_coordinate_index"), which is also shown in Table 4. The facegroup ID index ("basemeshFrame.attrIdxFacegroupIds") is set to the facegroup ID field in the ASVE basemesh attribute structure ("asve_basemesh attribute facegroup id index"), which is likewise also shown in Table 4.

**Signaling via a Supplementary Enhancement Information (SEI) message**

In some embodiments, the index of mesh attributes to be used for reconstruction may be signaled by an SEI message in the atlas bitstream or basemesh bitstream. This SEI message is classified under the prefix SEI message category so that this information is available before processing an access unit of V-DMC bitstream.

**Table 5.**

| Code Line | Descriptor |
|---|---|
| reconstruction_mesh_attribute () { | |
|    rec_mesh_attribute_atlas_id | u (8) |
|    rec_mesh_attribute_attribute_count_minus1 | u (8) |
|    for (k=0; k<rec_mesh_attribute_count+1; k++) { | |
|       rec_mesh_attribute_type_id[k] | u (8) |
|       rec_mesh_attribute_index[k] | u (8) |
|    } | |
| } | |

In Table 5, the syntax element rec_mesh attribute count_minus1 indiates the number of mesh attributes to be used for reconstruction. The value of the syntax element shall be less than or equal to the vps_ext_bmesh_data_attribute_count.

In the example code listing of Table 5, the received mesh attribute atlas ID ("rec mesh attribute_atlas_id") and the received mesh attribute attribute count ("rec_mesh_attribute_attribute_count_minus1") are each assigned an 8-bit field. A loop is executed for each of the received mesh attributes up to the received mesh attribute count. For each pass through the loop, the received mesh attribute type ID ("rec_mesh_attribute_type_id[k]") and the received mesh attribute index ("rec_mesh_attribute_index[k]") are assigned an 8-bit field for the loop's current received mesh attribute.

The array "rec_mesh_attribute_index" may be used to determine the index of mesh attributes of type "rec_mesh_attribute_type_id" for reconstruction for an atlas with an atlas ID value of "rec_mesh_attribute_atlas_id". There may be at most a single entry of an attribute with an attribute type in an SEI message. The value of rec_mesh_attribute_index shall be less than or equal to the vps_ext_bmesh_data_attribute_count.

The basemesh attributes for reconstruction may be identified via the syntax elements in the reconstruction process.

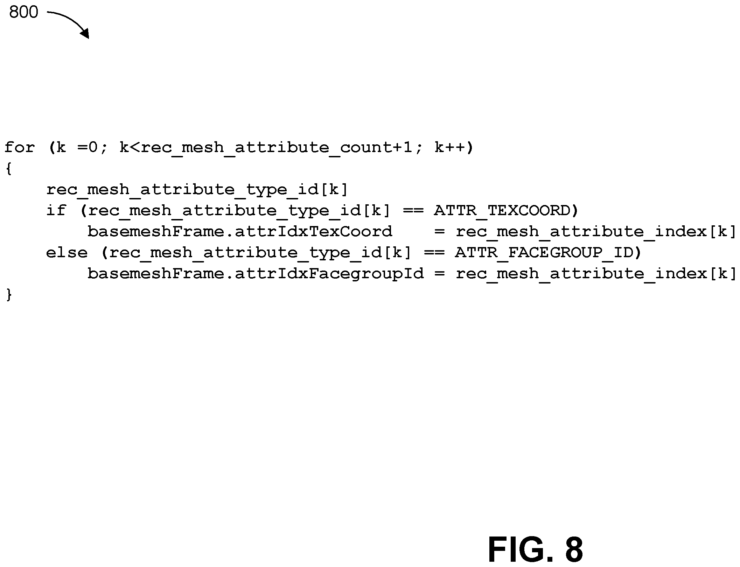

FIG. 8 is a code listing illustrating an example process for identifying basemesh attribute indices form an SEI message according to some embodiments. The code listing in FIG. 8 shows a process loop 800 that may be cycled through for each of the received mesh attributes. An index ("k") is used as the loop counter. The current received mesh attribute type ID is indicated as "rec_mesh_attribute_type_id[k]", which indicates the type of basemesh attribute for reconstruction. When the type of basemesh attribute is known, the corresponding index in rec_mesh_attribute_index[] is determined in order to fetch the respective attribute from the basemesh bitstream. If the current received mesh attribute type ID is equal to ATT_TEXTCOORD, then the basemesh frame texture coordinates attribute index ("basemeshFrame.attrIdxTexCoords") is set equal to the received mesh attribute index ("rec_mesh_attribute_index[k]"). Otherwise, if the current received mesh attribute type ID is equal to ATTR_FACEGROUP_ID, then the basemesh frame facegroup ID attribute index ("basemeshFrame.attrIdxFacegroupId") is set equal to the received mesh attribute index ("rec_mesh_attribute_index[k]").

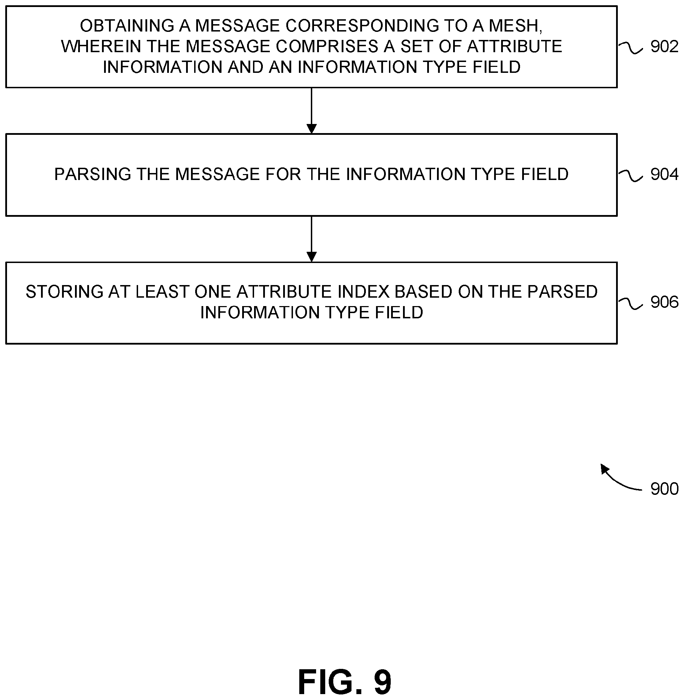

FIG. 9 is a flowchart illustrating an example process for obtaining mesh attribute indexes for reconstruction in a V-DMC bitstream according to some embodiments. For some embodiments, an example process 900 may include obtaining 902 a message corresponding to a mesh, wherein the message comprises a set of attribute information and an information type field. For some embodiments, the example process 900 may further include parsing 904 the message for the information type field. For some embodiments, the example process 900 may further include storing 906 at least one attribute index based on the parsed information type field.

A first example method in accordance with some embodiments may include: determining a reconstruction unit type; responsive to determining that the reconstruction unit type indicates a basemesh component type, assembling a bitstream header, wherein assembling the bitstream header includes: encoding a texture coordinates index and a facegroup identifier index as part of the bitstream header; encoding one or more remaining components of the bitstream header, signaling, in a bitstream, the assembled bitstream header.

For some embodiments of the first example method, the one or more remaining components may include a parameter set identifier and an atlas identifier.

A second example method in accordance with some embodiments may include: obtaining a message corresponding to a mesh, wherein the message includes one or more sets of attribute information, and wherein each of the one or more sets of attribute information includes an attribute type identifier and an attribute index; parsing the message for the attribute type identifier for a first set of the one or more sets of attribute information; and responsive to obtaining the attribute type identifier for the first set, storing the attribute index based on the attribute type identifier.

A third example method in accordance with some embodiments may include: obtaining an SEI message corresponding to a mesh, wherein the SEI message includes one or more sets of attribute information, and wherein each of the one or more sets of attribute information includes an attribute type identifier and an attribute index; parsing the SEI message for the attribute type identifier for a first set of the one or more sets of attribute information; and responsive to obtaining the attribute type identifier for the first set, storing the attribute index based on the attribute type identifier.

Some embodiments of the third example method may further include: decoding a basemesh frame corresponds to the mesh; and reconstructing the mesh using the decoded basemesh frame and the stored attribute index for at least one attribute.

For some embodiments of the third example method, storing the attribute index based on the attribute type identifier may include responsive to determining that the attribute type identifier for the first set indicates a texture coordinates attribute, storing the attribute index in a structure location reserved for a texture coordinates attribute index.

For some embodiments of the third example method, storing the attribute index based on the attribute type identifier may include responsive to determining that the attribute type identifier for the first set indicates a facegroup identifier attribute, storing the attribute index in a structure location reserved for a facegroup identifier attribute index.

An example apparatus in accordance with some embodiments may include: a processor; and a computer-readable medium storing instructions operative, when executed by the processor, to cause the apparatus to perform any one of the methods listed above.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a message corresponding to a mesh, wherein the message includes a set of attribute information and an information type field; parsing the message for the information type field; and storing at least one attribute index based on the parsed information type field.

In some embodiments of the example method, the message includes a V3C unit header.

In some embodiments of the example method, the information type field indicates a unit type corresponding to a basemesh data (BMD) unit type.

In some embodiments of the example method, the set of attribute information includes a texture coordinate index and a facegroup identifier index.

In some embodiments of the example method, storing the attribute index based on the parsed information type field includes: storing, as a first attribute index, the texture coordinate index of the set of attribute information; and storing, as a second attribute index, the facegroup identifier index of the set of attribute information.

In some embodiments of the example method, the message corresponds to a VPS V-DMC extension structure.

In some embodiments of the example method, the message corresponds to an Atlas Sequence Parameter Set (ASPS) V-DMC extension structure.

In some embodiments of the example method, the information type field indicates an attribute type corresponding to a VPS atlas identifier.

In some embodiments of the example method, the set of attribute information includes a texture coordinate index and a facegroup identifier index.

In some embodiments of the example method, storing the attribute index based on the parsed information type field includes: responsive to determining that the parsed information type field corresponds to a texture coordinate attribute, storing, as the at least one attribute index, the texture coordinate index of the set of attribute information.

In some embodiments of the example method, storing the attribute index based on the parsed information type field includes: responsive to determining that the parsed information type field corresponds to a facegroup identifier attribute, storing, as the at least one attribute index, the facegroup identifier index of the set of attribute information.

In some embodiments of the example method, the message corresponds to an SEI message, and the information type field indicates an attribute type.

In some embodiments of the example method, the set of attribute information includes a texture coordinate index and a facegroup identifier index.

Some embodiments of the example method may further include: decoding a basemesh frame corresponds to the mesh; and reconstructing the mesh using the decoded basemesh frame and the stored at least one attribute index.

An example apparatus in accordance with some embodiments may include: a processor; and a computer-readable medium storing instructions operative, when executed by the processor, to cause the apparatus to perform the method of any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of, for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining a message corresponding to a mesh,
   wherein the message comprises a set of attribute information and an information type field;
   parsing the message for the information type field; and
   storing at least one attribute index based on the parsed information type field.

2. The method of claim 1, wherein the message comprises a V3C unit header.

3. The method of any one of claims 1-2, wherein the information type field indicates a unit type corresponding to a basemesh data (BMD) unit type.

4. The method of any one of claims 1-3, wherein the set of attribute information comprises a texture coordinate index and a facegroup identifier index.

5. The method of claim 4, wherein storing the attribute index based on the parsed information type field comprises:

   storing, as a first attribute index, the texture coordinate index of the set of attribute information; and
   storing, as a second attribute index, the facegroup identifier index of the set of attribute information.

6. The method of claim 1, wherein the message corresponds to a VPS V-DMC extension structure.

7. The method of claim 1, wherein the message corresponds to an Atlas Sequence Parameter Set (ASPS) V-DMC extension structure.

8. The method of any one of claims 1, 6, and 7, wherein the information type field indicates an attribute type corresponding to a VPS atlas identifier.

9. The method of any one of claims 1 and 6-8, wherein the set of attribute information comprises a texture coordinate index and a facegroup identifier index.

10. The method of any one of claims 1 and 6-9, wherein storing the attribute index based on the parsed information type field comprises:
responsive to determining that the parsed information type field corresponds to a texture coordinate attribute, storing, as the at least one attribute index, the texture coordinate index of the set of attribute information.

11. The method of any one of claims 1 and 6-9, wherein storing the attribute index based on the parsed information type field comprises:
responsive to determining that the parsed information type field corresponds to a facegroup identifier attribute, storing, as the at least one attribute index, the facegroup identifier index of the set of attribute information.

12. The method of claim 1,

    wherein the message corresponds to an SEI message, and
    wherein the information type field indicates an attribute type.

13. The method of any one of claims 1 and 12, wherein the set of attribute information comprises a texture coordinate index and a facegroup identifier index.

14. The method of any one of claims 1-13, further comprising:

    decoding a basemesh frame corresponds to the mesh; and
    reconstructing the mesh using the decoded basemesh frame and the stored at least one attribute index.

15. An apparatus comprising:

    a processor; and
    a computer-readable medium storing instructions operative, when executed by the processor, to cause the apparatus to perform the method of any one of claims 1 through 14.

**FIG. 1**

**FIG. 2**

FIG. 3

**FIG. 4**

```
baseSubmeshFrame.verCoordCount      = basemeshFramesNF[compTimeIdx][submeshIdx].verCoordCount
baseSubmeshFrame.faceCount          = basemeshFramesNF[compTimeIdx][submeshIdx].faceCount
baseSubmeshFrame.verCoordsArray     = basemeshFramesNF[compTimeIdx][submeshIdx].verCoordsArray
baseSubmeshFrame.verCoordFacesArray = basemeshFramesNF[compTimeIdx][submeshIdx].verCoordFacesArray

basemeshFrame.attrIdxTexCoord    = -1
basemeshFrame.attrIdxFacegroupId = -1

for (i=0; i<vps_ext_bmesh_data_attribute_count[RecAtlasID]; i++)
{
    basemeshFrame.attrValueCountArray[i]     = basemeshFramesNF[compTimeIdx][submeshIdx].attrValueCount[i]
    basemeshFrame.attrValueDimensionArray[i] = basemeshFramesNF[compTimeIdx][submeshIdx].attrValueDimensionArray[i]
    basemeshFrame.attrValuesArray[i]         = basemeshFramesNF[compTimeIdx][submeshIdx].attrValuesArray[i]
    basemeshFrame.attrFacesArray[i]          = basemeshFramesNF[compTimeIdx][submeshIdx].attrFacesArray[i]
    if (vps_ext_bmesh_attribute_type[RecAtlasID][i] == ATTR_TEXCOORD)
        basemeshFrame.attrIdxTexCoord = i
    if (vps_ext_bmesh_attribute_type[RecAtlasID][i] == ATTR_FACEGROUP_ID)
        basemeshFrame.attrIdxFacegroupId = i
}
```

500 —

FIG. 5

```
for (i=0; i<vps_ext_bmesh_data_attribute_count[RecAtlasID]; i++)
{
    basemeshFrame.attrValueCountArray[i]     = basemeshFramesNF[compTimeIdx][submeshIdx].attrValueCount[i]
    basemeshFrame.attrValueDimensionArray[i] = basemeshFramesNF[compTimeIdx][submeshIdx].attrValueDimensionArray[i]
    basemeshFrame.attrValuesArray[i]         = basemeshFramesNF[compTimeIdx][submeshIdx].attrValuesArray[i]
    basemeshFrame.attrFacesArray[i]          = basemeshFramesNF[compTimeIdx][submeshIdx].attrFacesArray[i]
}

basemeshFrame.attrIdxTexCoord    = vuh_texture_coordinate_index
basemeshFrame.attrIdxFacegroupId = vuh_facegroup_id_index
```

# FIG. 6

```
700 ⟍

for (i=0; i<vps_ext_bmesh_data_attribute_count[RecAtlasID]; i++)
{
   basemeshFrame.attrValueCountArray[i]     = basemeshFramesNF[compTimeIdx][submeshIdx].attrValueCount[i]
   basemeshFrame.attrValueDimensionArray[i] = basemeshFramesNF[compTimeIdx][submeshIdx].attrValueDimensionArray[i]
   basemeshFrame.attrValuesArray[i]         = basemeshFramesNF[compTimeIdx][submeshIdx].attrValuesArray[i]
   basemeshFrame.attrFacesArray[i]          = basemeshFramesNF[compTimeIdx][submeshIdx].attrFacesArray[i]
}

basemeshFrame.attrIdxTexCoord    = asve_basemesh_attribute_texture_coordinate_index
basemeshFrame.attrIdxFacegroupId = asve_basemesh_attribute_facegroup_id_index
```

# FIG. 7

```
800

for (k =0; k<rec_mesh_attribute_count+1; k++)
{
    rec_mesh_attribute_type_id[k]
    if (rec_mesh_attribute_type_id[k] == ATTR_TEXCOORD)
        basemeshFrame.attrIdxTexCoord    = rec_mesh_attribute_index[k]
    else (rec_mesh_attribute_type_id[k] == ATTR_FACEGROUP_ID)
        basemeshFrame.attrIdxFacegroupId = rec_mesh_attribute_index[k]
}
```

**FIG. 8**

OBTAINING A MESSAGE CORRESPONDING TO A MESH, WHEREIN THE MESSAGE COMPRISES A SET OF ATTRIBUTE INFORMATION AND AN INFORMATION TYPE FIELD ～ 902

PARSING THE MESSAGE FOR THE INFORMATION TYPE FIELD ～ 904

STORING AT LEAST ONE ATTRIBUTE INDEX BASED ON THE PARSED INFORMATION TYPE FIELD ～ 906

900

# FIG. 9

<table>
<tr><td colspan="2">Europäisches<br>Patentamt<br>European<br>Patent Office<br>Office européen<br>des brevets</td><td>**EUROPEAN SEARCH REPORT**</td><td>**Application Number**<br><br>EP 24 30 6096</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GURDEEP SINGH (INTERDIGITAL) ET AL: "[V-DMC] [HLS] [New] Mapping attributes across V-DMC bitstream using attribute index or attribute unique ID", 144. MPEG MEETING; 20231016 - 20231020; HANNOVER; (MOTION PICTURE EXPERT GROUP OR ISO/IEC JTC1/SC29/WG11), , no. m65242 11 October 2023 (2023-10-11), XP030312757, Retrieved from the Internet: URL:https://dms.mpeg.expert/doc_end_user/documents/144_Hannover/wg11/m65242-v1-m65242_attribute_mapping.zip m65242_attribute_mapping.docx [retrieved on 2023-10-11] * the whole document * ----- | 1-15 | INV.<br>H04N19/70<br>G06T9/00 |
| X | JIZHENG XU (BYTEDANCE): "[V-DMC] [HLS] V-DMC WD 5.0 clean-ups", 145. MPEG MEETING; 20240122 - 20240126; ONLINE; (MOTION PICTURE EXPERT GROUP OR ISO/IEC JTC1/SC29/WG11), , no. m66275 18 January 2024 (2024-01-18), XP030315605, Retrieved from the Internet: URL:https://dms.mpeg.expert/doc_end_user/documents/145_OnLine/wg11/m66275-v1-m66275.zip m66275.docx [retrieved on 2024-01-18] * the whole document * -----<br><br>-/-- | 1-15 | TECHNICAL FIELDS SEARCHED (IPC)<br><br>H04N<br>G06T |

The present search report has been drawn up for all claims

| Place of search | Date of completion of the search | Examiner |
|---|---|---|
| Munich | 13 December 2024 | Schoeyer, Marnix |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.............................................................................
& : member of the same patent family, corresponding
   document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 6096

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Text of ISO/IEC CD 23090-29 Video-based mesh coding", 146. MPEG MEETING; 20240422 - 20240426; RENNES; (MOTION PICTURE EXPERT GROUP OR ISO/IEC JTC1/SC29/WG11), , no. n23903 4 June 2024 (2024-06-04), XP030319844, Retrieved from the Internet: URL:https://dms.mpeg.expert/doc_end_user/d ocuments/146_Rennes/wg11/MDS23903_WG07_N00 885.zip MDS23903_WG07_N00885/MDS23903_WG07_N00885_ clean.docx [retrieved on 2024-06-04] * page 11 - page 12 * * pages 70,77 * ----- | 1-15 | |
| X,P | GURDEEP SINGH BHULLAR (INTERDIGITAL) ET AL: "[V-DMC][HLS] On indexing Basemesh attributes", 147. MPEG MEETING; 20240715 - 20240719; SAPPORO; (MOTION PICTURE EXPERT GROUP OR ISO/IEC JTC1/SC29/WG11), , no. m68917 10 July 2024 (2024-07-10), XP030322554, Retrieved from the Internet: URL:https://dms.mpeg.expert/doc_end_user/d ocuments/147_Sapporo/wg11/m68917-v1-m68917 _vdmc_bmesh_attr_selection.zip m68917_vdmc_bmesh_attr_selection.docx [retrieved on 2024-07-10] * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 13 December 2024 | Schoeyer, Marnix |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24305101 A

**Non-patent literature cited in the description**

- Coded representation of immersive media Part 5: Visual volumetric video-based coding (V3C) and video-based point cloud compression (V-PCC). *ISO/IEC 23090-5:2023*, November 2023

- WD 5.0 of V-DMC. *ISO/IEC 23090-29, S. 2. Secretariat*, 20 October 2023
- Text of ISO/IEC CD 23090-29 Video-Based Mesh Coding. *ISO/IEC*, 04 June 2024